# EUROPÄISCHE PATENTSCHRIFT

(11) **EP 3 381 019 B1**
(45) Veröffentlichungstag und Bekanntmachung des Hinweises auf die Patenterteilung: **04.06.2025**
(21) Anmeldenummer: 16787379.3
(22) Anmeldetag: 20.10.2016
(51) Int. Cl.: G07C 5/08, B60W 50/04

(54) **ÜBERWACHUNGSSYSTEM FÜR EIN AUTONOMES FAHRZEUG**
MONITORING SYSTEM FOR AN AUTONOMOUS VEHICLE
SYSTÈME DE SURVEILLANCE CONÇU POUR UN VÉHICULE AUTONOME

(30) Priorität: 26.11.2015 DE 102015223429
(43) Veröffentlichungstag der Anmeldung: 03.10.2018
(73) Patentinhaber: Robert Bosch GmbH, 70442 Stuttgart (DE)
(72) Erfinder: WENDT, Hauke, 71254 Ditzingen (DE); CHIRKOV, Sergey, 70806 Kornwestheim (DE)
(86) Internationale Anmeldenummer: PCT/EP2016/075166
(87) Internationale Veröffentlichungsnummer: WO 2017/089038

(56) Entgegenhaltungen:
- EP-B1- 1 023 687
- DE-A1- 102011 015 130
- DE-A1- 102015 202 837
- US-A1- 2015 158 499
- ANDREAS RESCHKA ET AL: "A surveillance and safety system based on performance criteria and functional degradation for an autonomous vehicle", INTELLIGENT TRANSPORTATION SYSTEMS (ITSC), 2012 15TH INTERNATIONAL IEEE CONFERENCE ON, IEEE, 16 September 2012 (2012-09-16), pages 237 - 242, XP032264014, ISBN: 978-1-4673-3064-0, DOI: 10.1109/ITSC.2012.6338682
- "ONSTAR SYSTEM PUTS TELEMATICS ON THE MAP", ELECTRONIC DESIGN, PENTON MEDIA, CLEVELAND, OH, US, vol. 51, no. 7, 31 March 2003 (2003-03-31), XP001160034, ISSN: 0013-4872
- JOSEPH FUNKE ET AL: "Up to the limits: Autonomous Audi TTS", INTELLIGENT VEHICLES SYMPOSIUM (IV), 2012 IEEE, IEEE, 3 June 2012 (2012-06-03), pages 541 - 547, XP032453003, ISBN: 978-1-4673-2119-8, DOI: 10.1109/IVS.2012.6232212

## Beschreibung

Die Erfindung betrifft ein Verfahren und ein System zur Überwachung des Steuersystems eines autonomen Fahrzeugs sowie ein autonomes Fahrzeug, das mit einem solchen Überwachungssystem ausgestattet ist.

In absehbarer Zukunft werden autonome Fahrzeuge am Straßenverkehr teilnehmen. In solchen autonomen Fahrzeugen muss nicht notwendigerweise ein Fahrer mitfahren. Damit entfällt auch die Kontrollfunktion des Fahrers. Es ist daher notwendig, die Funktion des autonomen Fahrzeugs und seiner Systeme automatisch zu überwachen.

Aus dem Dokument US 2015/158499 A1 ist ein Fahrzeugüberwachungssystem bekannt. Ein Zentralprozessor bestimmt, ob sich eines oder mehrere Fahrzeuge in einem gefährlichen Zustand befinden oder sich diesem nähern.

Tritt in einem autonomen Fahrzeug ein Defekt auf, der das autonome Fahren verhindert, sind zwei grundlegend verschiedene Fälle zu unterscheiden: Im ersten Fall ist das System noch in der Lage, mit der Infrastruktur zu kommunizieren. In diesem Fall ist das System des autonomen Fahrzeugs selbst in der Lage, eine Meldung abzusenden, um den Besitzer über den Defekt zu informieren und/oder Hilfe zu holen. Im zweiten Fall ist das System so defekt, dass es nicht mehr in der Lage ist, selbst eine solche Meldung abzugeben.

Es ist daher wünschenswert, die Überwachung des Betriebs eines autonomen Fahrzeugs derart zu verbessern, dass auch im zweiten Fall eine Meldung des Defekts erfolgt.

Ein Aspekt der Erfindung betrifft ein Überwachungssystem zur Überwachung des Steuersystems eines autonomen Fahrzeugs mit den Merkmalen des Anspruchs 1.

Ein weiterer Aspekt der Erfindung betrifft ein Verfahren zum Überwachen des Steuersystems eines autonomen Fahrzeugs mit den Merkmalen des Anspruchs 9.

Ausführungsbeispiele der Erfindung umfassen auch ein autonomes Fahrzeug mit einem Steuersystem, das ausgebildet ist, das Fahrzeug autonom zu steuern, und einem Überwachungssystem gemäß einem Ausführungsbeispiel der Erfindung, das in der Lage ist, das Steuersystem des autonomen Fahrzeugs unabhängig von diesem zu überwachen und eine erkannte Fehlfunktion des Steuersystems an eine externe Überwachungsstelle zu melden.

Ein Verfahren und ein System zum Überwachen des Steuersystems eines autonomen Fahrzeugs ermöglichen, das Steuersystem unabhängig von der (Rest-)Funktion des Steuersystems zu überwachen. Ausfälle und Fehlfunktionen des Steuersystems können daher zuverlässig erkannt werden, auch wenn diese dazu geführt haben, dass das Steuersystem selbst keine Fehlermeldung mehr abgeben kann. Die Betriebssicherheit eines autonomen Fahrzeugs kann auf diese Weise erheblich verbessert werden.

In einer Ausführungsform ist das Überwachungssystem ausgebildet, eine im autonomen Fahrzeug vorhandene Kommunikationsvorrichtung zu verwenden, um mit der externen Überwachungsstelle zu kommunizieren. Dadurch können die Kosten für eine zusätzliche Kommunikationsvorrichtung eingespart werden, und die Kosten für das Überwachungssystem können gering gehalten werden.

In einer Ausführungsform ist das Überwachungssystem ausgebildet, eine eigene Kommunikationsvorrichtung, die unabhängig von der Kommunikationsvorrichtung des autonomen Fahrzeugs ist, zu verwenden, um mit der externen Überwachungsstelle zu kommunizieren. Auf diese Weise kann die Betriebssicherheit erhöht werden, da eine Kommunikation mit der externen Überwachungsstelle selbst dann möglich ist, wenn die Kommunikationsvorrichtung des autonomen Fahrzeugs gestört ist.

In einer Ausführungsform ist das Überwachungssystem ausgebildet, zunächst zu versuchen, über die Kommunikationsvorrichtung des autonomen Fahrzeugs mit der externen Überwachungsstelle zu kommunizieren, und seine eigene Kommunikationsvorrichtung zu verwenden, wenn die Kommunikationsvorrichtung des autonomen Fahrzeugs nicht funktionsfähig ist. Auf diese Weise kann eine besonders hohe Betriebssicherheit erreicht werden.

In einer Ausführungsform ist das Überwachungssystem ausgebildet, periodisch mit dem Steuersystem des autonomen Fahrzeugs zu kommunizieren und eine Fehlmeldung abzugeben, wenn die Kommunikation mit dem Steuersystem des autonomen Fahrzeugs abgebrochen oder für mehr als einen vorgegebenen Zeitraum unterbrochen wird. Auf diese Weise kann ein vollständiger Ausfall des Steuersystems, bei dem das Steuersystem nicht mehr in der Lage ist, selbst eine Fehlermeldung abzugeben, zuverlässig erkannt werden.

In einer Ausführungsform ist das Überwachungssystem ausgebildet, nach dem Erkennen einer Fehlfunktion des Steuersystems neben einer Fehlermeldung auch die aktuelle Position des autonomen Fahrzeugs an die Überwachungsstelle zu übertragen. Auf diese Weise können der Besitzer und/oder Servicepersonal schnell zu dem autonomen Fahrzeug geführt werden, um das autonome Fahrzeug zu bergen und/oder zu reparieren. Das Überwachungssystem kann insbesondere ausgebildet sein, die Position mit Hilfe eines satellitengestützten Positionssystems, beispielsweise des GPS-Systems, zu bestimmen.

In einer Ausführungsform ist das Überwachungssystem ausgebildet, nach dem Erkennen einer Fehlfunktion des Steuersystems wenigstes eine Warnvorrichtung des autonomen Fahrzeugs, beispielsweise den Warnblinker, zu aktivieren, um die Fahrer anderer Fahrzeuge, die sich in der Umgebung des autonomen Fahrzeugs befinden, vor der durch das nicht mehr funktionsfähige autonome Fahrzeug geschaffenen Gefahrenstelle zu warnen.

Die Art der von der Kommunikationsvorrichtung ausgesendete Meldung kann auch von der aktuellen Position des autonomen Fahrzeugs abhängig sein. Insbesondere kann das Überwachungssystem so ausgebildet sein, dass es keine Warnmeldung aussendet, wenn sich das autonome Fahrzeug in einer sicheren Position, beispielsweise auf einem Parkplatz befindet, an der es keine Gefahr darstellt.

Das Steuersystem des autonomen Fahrzeugs ist so ausgebildet, dass es den Beginn und das Ende jeder vom Steuersystem ausgeführten Funktion an das Überwachungssystem meldet. In diesem Fall hat, das Überwachungssystem stets aktuelle Informationen über den Betriebszustand des autonomen Fahrzeugs, und kann eine Fehlermeldung ausgeben, wenn sich aus den gemeldeten Informationen Widersprüche ergeben, z.B. weil gleichzeitig ein Beschleunigungsvorgang und ein Bremsvorgang gemeldet werden.

Das Überwachungssystem kann auch mit eigenen Sensoren, insbesondere Positions-, Geschwindigkeits- und/oder Beschleunigungssensoren ausgestattet sein, um den Betriebszustand des autonomen Fahrzeugs unabhängig vom Steuersystem des autonomen Fahrzeugs und seinen Sensoren überwachen zu können.

Das Überwachungssystem kann insbesondere ausgebildet sein, das Steuersystem zu deaktivieren und das autonome Fahrzeug zum Stillstand zu bringen, wenn es eine Fehlfunktion des Steuersystems erkannt hat. Auf diese Weise kann die Betriebssicherheit des autonomen Fahrzeugs noch weiter erhöht werden, da Fehlfunktionen des Steuersystems noch zuverlässiger erkannt werden können.

### Figurenbeschreibung

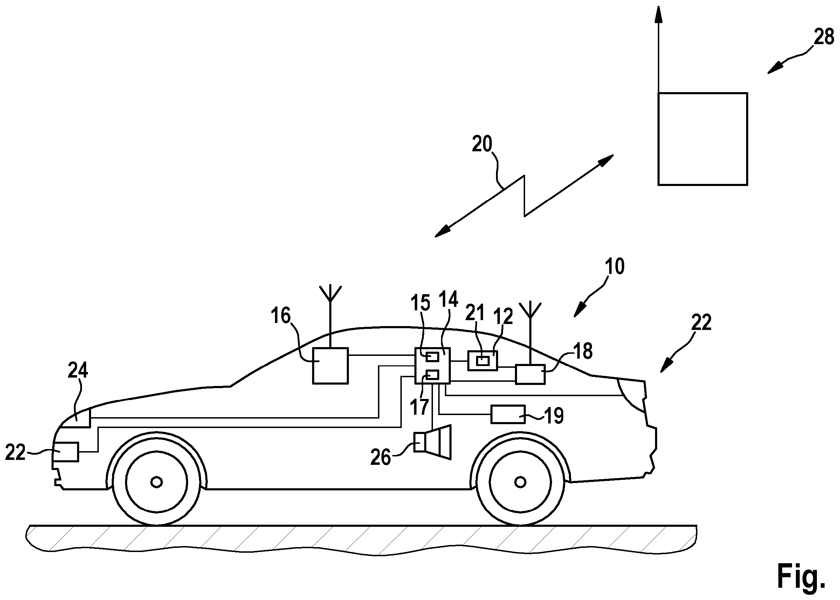

Ein Ausführungsbeispiel der Erfindung wird im Folgenden anhand der beigefügten Figur nähe erläutert:
Die Figur zeigt in einer schematischen Darstellung ein Ausführungsbeispiel eines autonomen Fahrzeugs 10, das mit einem Überwachungssystem 14 gemäß einem Ausführungsbeispiel der Erfindung ausgestattet ist.

Das autonome Fahrzeug 10 hat ein elektronisches Steuersystem 12, das ausgebildet ist, das autonome Fahrzeug 10 autonom, das heißt unabhängig von einem menschlichen Fahrer, zu steuern.

Die Einzelheiten des Steuersystems 12 sind nicht Gegenstand der vorliegenden Erfindung und werden daher im Folgenden nicht weiter diskutiert.

Um eine Fehlfunktion des Steuersystems 12 unabhängig von diesem erkennen zu können, ist das autonome Fahrzeug 10 mit einem Überwachungssystem 14 ausgestattet, das ausgebildet ist, die Funktionen des Steuersystems 12 kontinuierlich zu überwachen, Fehlfunktionen des Steuersystems 12 zu erkennen und eine erkannte Fehlfunktion des Steuersystems 12 an eine externe Überwachungs- und Steuerstelle 28, d.h. eine Überwachungs- und Steuerstelle 28, die außerhalb des autonomen Fahrzeugs 10 angeordnet ist, zu melden.

Diese Meldung erfolgt insbesondere über eine geeignete Datenverbindung 20, die beispielsweise über ein übliches Mobilfunknetz realisiert werden kann.

Um die Meldung zu übertragen, kann das Überwachungssystem 14 eine Kommunikationsvorrichtung 18 verwenden, die im Normalbetrieb von dem Steuergerät 12 verwendet wird, um mit der externen Überwachungs- und Steuerstelle 28 zu kommunizieren und Fahraufträge entgegen zu nehmen.

Zusätzlich kann eine weitere Kommunikationsvorrichtung 16 vorgesehen sein, die es dem Überwachungssystem 14 ermöglicht, mit der externen Überwachungs- und Steuerstelle 28 zu kommunizieren, wenn die "normale" Kommunikationsvorrichtung 18, die mit dem Steuergerät 12 verbunden ist, gestört oder beschädigt ist.

Die Überwachungsvorrichtung 14 kann insbesondere ausgebildet sein, periodisch, das heißt in vorgegebenen Zeitabständen, mit dem Steuersystem 12 zu kommunizieren, um dessen Funktionsfähigkeit zu überwachen. Wenn das Steuergerät 12 in einem vorgegebenen Zeitintervall nicht reagiert und/oder keine Nachricht an die Überwachungsvorrichtung 14 überträgt, schließt die Überwachungsvorrichtung 14 auf eine Fehlfunktion des Steuergeräts 12 und überträgt eine entsprechende Meldung an die externe Überwachungs- und Steuerstelle 28.

Die Überwachungsvorrichtung 14 umfasst auch eine Positionsbestimmungsvorrichtung 15. Mit Hilfe der Positionsbestimmungsvorrichtung 15 ist die Überwachungsvorrichtung 14 in der Lage, die aktuelle Position des autonomen Fahrzeugs 10 unabhängig von dem Steuergerät 12 zu bestimmen und an die externe Überwachungs- und Steuerstelle 28 zu übertragen, wenn eine Fehlfunktion des Steuergeräts 12 erkannt worden ist. Die Positionsbestimmungsvorrichtung 15 kann einen Empfänger für ein satellitengestütztes Navigationssystem umfassen und/oder auf anderen Technologien zur Positionsbestimmung beruhen und beispielsweise Mobilfunk- und/oder WLAN-Netze zur Ortsbestimmung verwenden.

In einem Ausführungsbeispiel umfasst die Überwachungsvorrichtung 14 eine eigene Energieversorgung 17, beispielsweise eine Batterie bzw. einen Akku. Diese ermöglicht es der Überwachungsvorrichtung 14, auch dann eine Fehlermeldung an die externe Überwachungs- und Steuerstelle 28 zu übertragen, wenn die Energieversorgung des autonomen Fahrzeugs 10 ausgefallen ist.

Durch Übertragen der aktuellen Position des autonomen Fahrzeugs 10 an die externe Überwachungs- und Steuerstelle 28 kann diese gezielt Servicepersonal zu dem gestörten autonomen Fahrzeug 10 schicken, um die Störung zu beseitigen und das autonome Fahrzeug 10 möglichst schnell wieder in einen betriebsfähigen Zustand zu versetzen.

Die Überwachungsvorrichtung 14 ist darüber hinaus ausgebildet, akustische und/oder optische Warnvorrichtungen 22, 24, 26, beispielsweise die Warnblinkanlage 22, die Scheinwerfer/Lichthupe 24 und/oder die Hupe 26 des autonomen Fahrzeugs 10 zu aktivieren, um die Umgebung vor dem autonomen Fahrzeug 10 zu warnen.

Beispielsweise kann die Warnblinkanlage 22 aktiviert werden, wenn das autonome Fahrzeug 10 aufgrund einer Störung auf der Straße liegengeblieben ist und nicht mehr in der Lage ist, einen sicheren Abstellplatz, insbesondere einen Parkplatz, zu erreichen.

Sollte die Überwachungsvorrichtung 14 während der Fahrt des autonomen Fahrzeugs 10 beispielsweise feststellen, dass das Bremssystem gestört ist und das autonome Fahrzeug 10 daher nicht sofort zum Stillstand gebracht werden kann, kann es sinnvoll sein, die Umgebung des autonomen Fahrzeugs 10 durch Aktivieren der Lichthupe 24 und/oder der Hupe 26 zu warnen, während gleichzeitig eine Fehlermeldung an die externe Überwachungs- und Steuerstelle 28 übertragen wird.

Die Überwachungsvorrichtung kann auch mit eigenen Sensoren 19, insbesondere Positions-, Geschwindigkeits- und/oder Beschleunigungssensoren 19 verbunden und/oder ausgestattet sein, die es ermöglichen, die Funktion des Steuergeräts 12 unabhängig von den Sensoren 21 des Steuergeräts 12 zu überwachen. Auf diese Weise kann eine Fehlfunktion des Steuergeräts 12 auch dann zuverlässig erkannt werden, wenn diese auf einer Fehlfunktion der Sensoren 21 des Steuergeräts 12 beruht. Eine solche Fehlfunktion könnte von der Überwachungsvorrichtung 14 nicht oder nur schwer erkannt werden, wenn diese auf die Informationen von den gleichen Sensoren 21 wie das Steuergerät 12 angewiesen ist.

## Patentansprüche

1. Überwachungssystem (14) zur Überwachung des Steuersystems (12) eines autonomen Fahrzeugs (10), wobei das Überwachungssystem (14) unabhängig vom Steuersystem (12) des autonomen Fahrzeugs (10) ausgebildet und eingerichtet ist:
die Funktionen des Steuersystems (12) zu überwachen, um Fehlfunktionen des Steuersystems (12) zu erkennen, und
eine erkannte Fehlfunktion des Steuersystems (12) an eine externe Überwachungsstelle (28) zu melden, **dadurch gekennzeichnet, dass** das Überwachungssystem dazu ausgebildet ist den Beginn und das Ende jeder vom Steuersystem ausgeführten Funktion vom Steuersystem gemeldet zu bekommen, so dass das Überwachungssystem (14) stets aktuelle Informationen über den Betriebszustand des autonomen Fahrzeugs (10) hat und eine Fehlermeldung ausgibt, wenn sich aus den gemeldeten Informationen Widersprüche ergeben.

2. Überwachungssystem (14) nach Anspruch 1, das ausgebildet ist, eine Kommunikationsvorrichtung (18) des autonomen Fahrzeugs (10) zu verwenden, um mit der externen Überwachungsstelle (28) zu kommunizieren.

3. Überwachungssystem (14) nach Anspruch 1 oder 2, das ausgebildet ist, eine eigene Kommunikationsvorrichtung (16), die unabhängig von der Kommunikationsvorrichtung (18) des autonomen Fahrzeugs (10) ist, zu verwenden, um mit der externen Überwachungsstelle (28) zu kommunizieren.

4. Überwachungssystem (14) nach einem der vorangehenden Ansprüche, wobei das Überwachungssystem (14) ausgebildet ist, periodisch mit dem Steuersystem (12) des autonomen Fahrzeugs (10) zu kommunizieren.

5. Überwachungssystem (14) nach Anspruch 4, wobei das Überwachungssystem (14) ausgebildet ist, eine Fehlfunktion des Steuersystems (12) zu melden, wenn die Kommunikation mit dem Steuersystem (12) des autonomen Fahrzeugs (10) für mehr als einen vorgegebenen Zeitraum unterbrochen ist.

6. Überwachungssystem (14) nach einem der vorangehenden Ansprüche, wobei das Überwachungssystem (14) ausgebildet ist, nach Erkennen einer Fehlfunktion des Steuersystems (12) die aktuelle Position des autonomen Fahrzeugs (10) an die Überwachungsstelle (28) zu melden.

7. Überwachungssystem (14) nach einem der vorangehenden Ansprüche, wobei das Überwachungssystem (14) ausgebildet ist, nach Erkennen einer Fehlfunktion des Steuersystems (12), wenigstes eine Warnvorrichtung (22, 24, 26) des autonomen Fahrzeugs (10) zu aktivieren.

8. Autonomes Fahrzeug (10) mit einem Steuersystem (12), das ausgebildet ist, das Fahrzeug (10) autonom zu steuern, und mit einem Überwachungssystem (14) nach einem der vorangehenden Ansprüche.

9. Verfahren zum Überwachen des Steuersystems (12) eines autonomen Fahrzeugs (10), wobei das Verfahren umfasst,
Funktionen des Steuersystems (12) mit einem Überwachungssystem (14), das unabhängig vom Steuersystem (12) des autonomen Fahrzeugs (10) ist, zu überwachen, um Fehlfunktionen des Steuersystems (12) zu erkennen, und
eine erkannte Fehlfunktion des Steuersystems (12) an eine externe Überwachungsstelle (28) zu melden, **dadurch gekennzeichnet, dass** das Überwachungssystem den Beginn und das Ende jeder vom Steuersystem ausgeführten Funktion vom Steuersystem gemeldet bekommt, so dass das Überwachungssystem (14) stets aktuelle Informationen über den Betriebszustand des autonomen Fahrzeugs (10) hat und eine Fehlermeldung ausgibt, wenn sich aus den gemeldeten Informationen Widersprüche ergeben.

## Claims

1. Monitoring system (14) for monitoring the control system (12) of an autonomous vehicle (10), wherein the monitoring system (14) is independent of the control system (12) of the autonomous vehicle (10) and is configured:
to monitor the functions of the control system (12) to detect malfunctions of the control system (12), and
to report a detected malfunction of the control system (12) to an external monitoring point (28), **characterized in that** the monitoring system is designed to receive reports of the start and end of each function performed by the control system from the control system, so that the monitoring system (14) always has up-to-date information about the operating state of the autonomous vehicle (10) and outputs an error message if inconsistencies arise from the reported information.

2. Monitoring system (14) according to Claim 1, designed to use a communication device (18) of the autonomous vehicle (10) to communicate with the external monitoring point (28).

3. Monitoring system (14) according to Claim 1 or 2, designed to use a separate communication device (16), which is independent of the communication device (18) of the autonomous vehicle (10), to communicate with the external monitoring point (28).

4. Monitoring system (14) according to one of the preceding claims, wherein the monitoring system (14) is designed to communicate periodically with the control system (12) of the autonomous vehicle (10).

5. Monitoring system (14) according to Claim 4, wherein the monitoring system (14) is designed to report a malfunction of the control system (12) if the communication with the control system (12) of the autonomous vehicle (10) is interrupted for more than a predetermined period of time.

6. Monitoring system (14) according to one of the preceding claims, wherein the monitoring system (14) is designed to report the current position of the autonomous vehicle (10) to the monitoring point (28) after detecting a malfunction of the control system (12).

7. Monitoring system (14) according to one of the preceding claims, wherein the monitoring system (14) is designed to activate at least one warning device (22, 24, 26) of the autonomous vehicle (10) after detecting a malfunction of the control system (12).

8. Autonomous vehicle (10) having a control system (12) that is designed to autonomously control the vehicle (10), and having a monitoring system (14) according to one of the preceding claims.

9. Method for monitoring the control system (12) of an autonomous vehicle (10), wherein the method comprises
monitoring functions of the control system (12) using a monitoring system (14) that is independent of the control system (12) of the autonomous vehicle (10) to detect malfunctions of the control system (12), and
reporting a detected malfunction of the control system (12) to an external monitoring point (28), **characterized in that** the monitoring system receives reports of the start and end of each function performed by the control system from the control system, so that the monitoring system (14) always has up-to-date information about the operating state of the autonomous vehicle (10) and outputs an error message if inconsistencies arise from the reported information.

## Revendications

1. Système de surveillance (14) pour surveiller le système de commande (12) d'un véhicule autonome (10), le système de surveillance (14) étant conçu indépendamment du système de commande (12) du véhicule autonome (10) et configuré pour :
surveiller le fonctionnement du système de commande (12) afin de détecter des dysfonctionnements du système de commande (12), et
signaler un dysfonctionnement détecté du système de commande (12) à une station de surveillance (28) externe, **caractérisé en ce que** le système de surveillance est conçu pour recevoir du système de commande le début et la fin de chaque fonction exécutée par le système de commande, de sorte que le système de surveillance (14) dispose toujours d'informations actuelles sur l'état de fonctionnement du véhicule autonome (10) et délivre un message d'erreur en cas de contradictions résultant des informations signalées.

2. Système de surveillance (14) selon la revendication 1, conçu pour utiliser un dispositif de communication (18) du véhicule autonome (10) afin de communiquer avec la station de surveillance (28) externe.

3. Système de surveillance (14) selon la revendication 1 ou 2, conçu pour utiliser son propre dispositif de communication (16), qui est indépendant du dispositif de communication (18) du véhicule autonome (10), afin de communiquer avec la station de surveillance (28) externe.

4. Système de surveillance (14) selon l'une quelconque des revendications précédentes, dans lequel le système de surveillance (14) est conçu pour communiquer périodiquement avec le système de commande (12) du véhicule autonome (10).

5. Système de surveillance (14) selon la revendication 4, dans lequel le système de surveillance (14) est conçu pour signaler un dysfonctionnement du système de commande (12) lorsque la communication avec le système de commande (12) du véhicule autonome (10) est interrompue pendant plus d'une période prédéfinie.

6. Système de surveillance (14) selon l'une quelconque des revendications précédentes, dans lequel le système de surveillance (14) est conçu pour signaler la position actuelle du véhicule autonome (10) à la station de surveillance (28) après avoir détecté un dysfonctionnement du système de commande (12).

7. Système de surveillance (14) selon l'une quelconque des revendications précédentes, dans lequel le système de surveillance (14) est conçu pour activer au moins un dispositif d'avertissement (22, 24, 26) du véhicule autonome (10) après avoir détecté un dysfonctionnement du système de commande (12).

8. Véhicule autonome (10) comprenant un système de commande (12) conçu pour commander le véhicule (10) de manière autonome, et comprenant un système de surveillance (14) selon l'une quelconque des revendications précédentes.

9. Procédé de surveillance du système de commande (12) d'un véhicule autonome (10), le procédé comprenant :
la surveillance des fonctions du système de commande (12) au moyen d'un système de surveillance (14) qui est indépendant du système de commande (12) du véhicule autonome (10) afin de détecter des dysfonctionnements du système de commande (12), et
le signalement d'un dysfonctionnement détecté du système de commande (12) à une station de surveillance (28) externe, **caractérisé en ce que** le système de surveillance reçoit du système de commande le début et la fin de chaque fonction exécutée par le système de commande, de sorte que le système de surveillance (14) dispose toujours d'informations actuelles sur l'état de fonctionnement du véhicule autonome (10) et délivre un message d'erreur en cas de contradictions résultant des informations signalées.
